# EUROPÄISCHE PATENTANMELDUNG

(11) **EP 0 999 528 A2**
(43) Veröffentlichungstag der Anmeldung: **10.05.2000**
(21) Anmeldenummer: 99122157.3
(22) Anmeldetag: 05.11.1999
(51) Int. Cl.: G07F 7/10, G06K 19/07

(54) **System und Verfahren zur sicheren Identifikation und Registrierung von Personen, insbesondere für die Herausgabe von personenbezogenen Berechtigungsmitteln wie einer digitalen Signaturkarte sowie eine für ein solches System geeignete Registriereinrichtung**

(30) Priorität: 05.11.1998 DE 19851074
(71) Anmelder: Elsdale Limited, St. Helier, Jersey (GB)
(72) Erfinder: Wagner, Ingvar, 63128 Dietzenbach (DE)
(74) Vertreter: Winter, Brandl & Partner

(57) **Zusammenfassung**

Es wird ein System in einem Verfahren zur sicheren Identifikation und Registrierung von Personen, insbesondere für die Herausgabe von personenbezogenen Berechtigungsmitteln wie einer digitalen Signaturkarte angegeben. Die sichere Registrierung erfolgt in einem System bestehend aus einem Berechtigungsherausgeber, zum Beispiel einem Trust Center, und wenigstens einer Registrierungsstelle, wobei Berechtigungsherausgeber und Registrierungsstelle in ein Authentifikationssystem eingebunden sind das sicherstellt, daß nur von dem Berechtigungsherausgeber berechtigte Registrierungsstellen die Registrierung vornehmen können. Dies wird dadurch erreicht, daß personenbezogene Daten von einem die zu registrierende Person identifizierenden Dokument eingelesen werden, wobei das zu identifizierende Dokument wenigstens ein biometrisches Merkmal der Person enthält. Das von dem identifizierenden Dokument übernommene biometrische Merkmal wird auch vor Ort von der anwesenden Person übernommen beziehungsweise gemacht. Eine Verifikationseinheit vergleicht die unmittelbar vor Ort erfassten Daten mit denen von dem identifizierenden Dokument erfassten Daten und stellt mit einer gewissen Wahrscheinlichkeit fest, ob es sich bei der eine Registrierung nachsuchenden Person auch tatsächlich um die Person handelt, die sie vorgibt zu sein.

## Beschreibung

Die Erfindung betrifft ein System und ein Verfahren zur sicheren Identifikation und der Registrierung von Personen, insbesondere für die Herausgabe von personenbezogenen Berechtigungsmitteln wie einer digitalen Signaturkarte sowie eine für ein solches System geeignet Registriereinrichtung.

Das Gesetz zur digitalen Signatur (Signaturgesetz) regelt die Rahmenbedienungen nach denen digitale Signaturen, Zertifikate und Zeitstempel ausgegeben werden. Es besteht daher ein Bedarf an gesetzeskonformen Einrichtungen, Systemen und Verfahren zur sicheren Identifikation und Registrierung von Personen, so daß gewährleistet ist, daß Berechtigungen wie digitale Signaturkarten nur an sicher identifizierte Personen herausgegeben werden. Da bei Ausgabe einer Signaturkarte an eine unberechtigte Person Haftungsfragen für Registrierungstellen und Trust Center (Berechtigungsherausgeber) auftreten, besteht Bedarf für eine sicheres Ausgabeverfahren und -system. Die gesetzlichen Bestimmungen allein geben diese Sicherheit noch nicht.

Aus der WO-A 98/28721 ist ein Gerät bekannt, welches Personendaten unter anderen mit einem Ausweisleser erfaßt und zur Ausgabe von weiteren personenbezogenen Dokumenten verarbeitet. Hierbei ist jedoch nicht sichergestellt, daß die erfaßten Personendaten tatsächlich die Personendaten der anwesenden Person sind. Es könnte z. B. ein amtlicher Ausweis gelesen werden der nicht zu der anwesenden Person gehört.

Es ist daher Aufgabe der vorliegenden Erfindung ein System und ein Verfahren zur sicheren Identifikation und Registrierung von Personen, insbesondere für die Herausgabe von personenbezogenen Berechtigungsmitteln, wie einer digitalen Signaturkarte anzugeben, bei denen gewährleistet ist, daß das Berechtigungsmittel bzw. die Freigabe zur Herausgabe dieses Berechtigungsmittel nur an eine sicher identifizierte Person erteilt wird. Weiter ist es Aufgabe der vorliegenden Erfindung eine für das System geeignete Registriereinrichtung anzugeben.

Die Lösung dieser Aufgabe erfolgt durch die Merkmale der Ansprüche 1, 16 bzw. 21.

Die sichere Registrierung erfolgt in einem System bestehend aus einem Berechtigungsherausgeber, bei der Herausgabe von digitalen Signaturkarten einem sogenannten Trust Center, und wenigstens einer Registrierungsstelle, wobei Berechtigungsherausgeber und Registrierungsstelle(n) in ein Authentifikationssystem eingebunden sind, das sicher stellt, daß nur von dem Berechtigungsherausgeber berechtigte Registrierungstellen die Registrierung vornehmen können. Damit wird verhindert, daß "falsche" Berechtigunsmittel in Umlauf geraten. Die Registrierungstellen umfassen hierbei erfindungsgemäße Registriereinrichtungen mit denen zuverlässig ermittelt werden kann, ob eine um eine Registrierung nachsuchende Person tatsächlich diejenige Person ist, die sie vorgibt zu sein. Dies wird dadurch erreicht, daß personenbezogene Daten von einem die zu registrierende Person identifizierende Dokument eingelesen werden, wobei das zu identifizierende Dokument wenigstens ein biometrische Merkmal der Person, wie z. B. ein Paßfoto, eine Unterschrift, einen Fingerabdruck oder dgl. enthält. Das von dem identifizierende Dokument übernommene biometrische Merkmal wird auch vor Ort von der anwesenden Person übernommen, indem z. B. ein Foto der anwesenden Person gemacht wird oder indem die anwesende Person eine Unterschriftsprobe gibt. Gemäß einer vorteilhaften Ausprägung der Erfindung vergleicht eine Verifikationseinheit die unmittelbar vor Ort erfaßten Daten mit dem von dem identifizierenden Dokument erfaßten Daten und stellt mit einer gewissen Wahrscheinlichkeit fest, ob es sich bei der um einer Registrierung nachsuchenden Person auch tatsächlich um die Person handelt, die sie vorgibt zu sein. Die Identität der um einer Registrierung nachsuchenden Person wird mit einer bestimmten Wahrscheinlichkeit festgestellt, wobei einstellbar ist, mit welcher Wahrscheinlichkeit die Identität festgestellt werden muß, um die Herausgabe eines Berechtigungsmittels freizugeben.

Gemäß einer vorteilhaften Ausgestaltung der Erfindung ist dem Berechtigungsherausgebern ein übergeordneter Berechtigungsherausgeber (Root) zugeordnet, der ebenfalls in das Authentifikationssystem eingebunden wird.

Gemäß einer weiteren vorteilhaften Ausgestaltung der Erfindung sind die Programme und Daten für die erfindungsgemäße Anwendung auf den EDV-Anlagen der Berechtigungsherausgeber und der Registrierungstellen physisch oder virtuell von anderen Anwendungen getrennt. Alternative können die EDV-Anlagen mit ihren Komponenten auch ausschließlich für die sichere Identifikation und Registrierung von Personen für die Herausgabe von Berechtigungsmitteln genutzt werden. Hierdurch wird die Möglichkeit von Manipulationen verringert.

Gemäß einer weiteren vorteilhaften Ausgestaltung der Erfindung überprüft der Dokumentenleser in der Identifikationseinheit die Echtheit des eingelesenen Dokuments. Dies Prüfung kann sowohl die physische Echtheit durch Erfassung von Wasserzeichen, Sicherungsfäden, Papierart usw., als auch die Prüfung der inhaltlichen Echtheit durch Abgleich mit externen Datenbanken, etc. umfassen.

Gemäß einer weiteren vorteilhaften Ausgestaltung der Erfindung wird das Authentifikationssystem dadurch verwirklicht, daß sowohl die Berechtigungsherausgeber als auch die Registrierungstellen mittels einer sicheren ID, z. B. in Form eines elektronischen Schlüssels, eindeutig identifizierbar sind. Das heißt, die einzelnen Komponenten des Systems sind mit einer sicheren ID in Form eines elektronischen Zertifikats, in Form einer digitalen Signaturkarte etc. eindeutig identifiziert, wodurch Manipulationen erschwert werden. Gemäß einer weiteren vorteilhaften Ausgestaltung der Erfindung sind auch die einzelnen Komponenten der Berechtigungsherausgeber und der Registrierungstellen mit individuellen sicheren IDs ausgestattet. Auf diese Weise kann sicher verhindert werden, daß sich externe Komponenten in dieses System mit sicheren IDs einschalten, so daß Manipulationen nahezu ausgeschlossen sind.

Gemäß einer weiteren vorteilhaften Ausgestaltung der Erfindung wird die sichere ID der Berechtigungsherausgeber durch den übergeordneten Berechtigungsherausgeber erteilt und die sichere ID der Registrierungsstellen erfolgt durch die zugeordneten Berechtigungsherausgeber. Auch hierdurch wird die Manipulationssicherheit erhöht.

Gemäß einer weiteren vorteilhaften Ausgestaltung der Erfindung werden die sicheren IDs, der Berechtigungsherausgeber, der Registrierungsstellen, sowie der einzelnen Komponenten periodisch oder bei bestimmten Ereignissen überprüft, so daß immer gewährleistet ist, daß nur "berechtigte" Komponenten und Stellen in das erfindungsgemäße System eingebunden sind.

Gemäß einer weiteren vorteilhaften Ausgestaltung der Erfindung ist die Registriereinrichtung nur funktionsfähig, d. h. es können nur Registrierungen vorgenommen werden, wenn sowohl die sichere ID der jeweiligen Registrierungsstelle als auch die sichere ID des zugehörigen Berechtigungsherausgebers vorliegt und als richtig erkannt worden ist. Auch hierdurch wird die Manipulationssicherheit erhöht.

Gemäß einer weiteren vorteilhaften Ausgestaltung der Erfindung lassen sich die einzelnen Komponenten der EDV-Anlagen bzw. der Registriereinrichtungen nur durch "berechtigte" Personen mit einer sicheren ID aktivieren. Das heißt, jede Bedienungsperson muß beispielsweise ihre persönliche digitale Signaturkarte in das Gerät einschieben und nur wenn die jeweilige Hardwarekomponente die durch die digitale Signaturkarte identifizierte Person als "berechtigte" Person erkennt, läßt sich die jeweilige Hardwarekomponente aktivieren bzw. das Anwendungsprogramm für die Registrierung und Identifikation der Personen aufrufen. Anstelle einer digitalen Signaturkarte kann auch ein spezieller elektronischer Schlüssel, Passwörter, biometrische Merkmale, etc. verwendet werden. Auch hierdurch wird die Manipulationssicherheit weiter erhöht.

Gemäß einer weiteren vorteilhaften Ausgestaltung ersparen elektronische Schnittstellen zu Melderegistern dem "Kunden" - der zu registrierenden Person - den Weg zur Gemeinde, Wohnsitzbestätigungen können online eingeholt werden. Die elektronischen Schnittstellen zu externen und Internen Registern und Datenbanken können generell zum Abgleich von Daten, Beschaffung benötigter Daten und für Plausibilitätsprüfungen verwendet werden. Durch die Möglichkeit der bargeldlosen Zahlung mittels EFTPOS werden Kasse und Buchhaltung entlastet.

Gemäß einer weiteren vorteilhaften Ausgestaltung der Erfindung umfaßt die Registriereinrichtung eine Chipkarten-Bearbeitungseinrichtung mittels der die notwendigen Daten und Informationen in Berechtigungsmittel in Form von Chipkarten ein- bzw. aufgebracht werden. Dies gilt insbesondere für die Ausgabe von digitalen Signaturkarten. Damit können Berechtigunsmittel in Form von Karten auf der Oberfläche oder in der Karte mit Merkmalen versehen werden. So kann der Name des Berechtigten aufgedruckt sein, es können Merkmale in unsichtbarer Schrift aufgedruckt werden oder das Foto des Berechtigen wird auf das Berechtigungsmittel aufgedruckt.

Gemäß einer weiteren vorteilhaften Ausgestaltung der Erfindung umfassen die Identifikationseinheiten der Registriereinrichtungen auch eine Einrichtung zur Erfassung der Dynamik eines biometrischen Merkmals. Damit kann beispielsweise die Schreibgeschwindigkeit und die Druckverteilung bei der Unterschrift erfaßt und überprüft werden. Hierdurch kann die Wahrscheinlichkeit mit der die Identität einer Person festgestellt wird weiter erhöht werden.

Mit dem erfindungsgemäßen Verfahren nach Anspruch 21 kann die Identität einer um einer Registrierung nachsuchenden Person sicher festgestellt werden.

Gemäß einer vorteilhaften Ausgestaltung der Erfindung kann zu Beginn der Registrierung ausgewählt werden, welches Berechtigungsmittel, z. B. digitale Signaturkarte, gewünscht wird. Auf diese Weise lassen sich mit ein und derselben Registriereinrichtung verschiedene Berechtigungsmittel ausgeben bzw. die Freigabe für die Ausgabe erteilen.

Gemäß einer weiteren vorteilhaften Ausgestaltung der Erfindung wird die Sicherheit der Identifikation dadurch erhöht, daß neben personenbezogenen Daten von einem identifizierenden Dokument auch personenbezogene Daten von internen und externen Datenbanken, wie z. B. einem Einwohnermelderegister, Führerscheinlisten, einem Zentralregister, CD-ROM, etc. hinzugezogen und auf Übereinstimmung geprüft werden. Außerdem ist auch eine dialoggeführte Rückfrage bei der zu registrierenden Person möglich. Weiter können benötigte Angaben, Merkmale und Attribute der zu registrierenden Person von weiteren die zu registrierende Person beschreibenden Dokumenten eingelesen und verarbeitet werden.

Gemäß einer weiteren vorteilhaften Ausgestaltung der Erfindung lassen sich die erhobenen Daten anzeigen und/oder ausdrucken. Dies kann lediglich zur Information oder in Form eines Antrags erfolgen, der dann auch gleich unterzeichnet werden kann.

Das erfindungsgemäße System eignet sich insbesondere für die Ausgabe einer digitalen Signaturkarte gemäß Anspruch 32. Hierbei wird zunächst die Person, die um eine digitale Signaturkarte nachfragt gemäß dem erfindungsgemäßen Verfahren sicher identifiziert. Zusätzlich werden PSE-Daten von einer vorinitialisierten Chipkarte ausgelesen und an ein Softwareprogramm übergeben. Durch die Software werden die personenbezogenen Daten des sicher identifizierten Antragstellers mit den PSE-Daten kombiniert und die für die Herausgabe der digitalen Signaturkarte benötigten Daten werden auf einer gesetzeskonformen Anzeige angezeigt. Danach werden die relevanten Daten signiert, verschlüsselt und an den Berechtigungsherausgeber übertragen. Nach Überprüfung beim Berechtigungsherausgeber wird das zugehörige Zertifikat digital signiert und verschlüsselt an die Registrierungsstelle übertragen. In der Registrierungsstelle werden die übertragenen Daten entschlüsselt und wiederum überprüft und im Falle eines positiven Ergebnisses der Überprüfung bzw. der Freigabe durch den Berechtigungsherausgeber werden die erforderlichen Daten mit dem Zertifikat auf die vorinitialisierte Chipkarte übertragen und diese personalisiert. Dann erfolgt die vom Gesetz vorgeschriebene Belehrung und der Ausdruck einer Bestätigung über die erfolgte Belehrung und dem Erhalt der digitalen Signaturkarte.

Gemäß einer vorteilhaften Ausgestaltung der Erfindung wird die Einmaligkeit des in dem PSE-Daten der vorinitialisierten Chipkarte enthaltenen Schlüssels durch den Berechtigungsherausgeber entweder bei der Übergabe des Zertifikats oder vorab überprüft.

Gemäß einer weiteren vorteilhaften Ausgestaltung der Erfindung erfolgt die Belehrung bei Ausgabe der digitalen Signaturkarte mittels einer programmierten, dialoggeführten Unterweisung mit anschließendem Test. Nur wenn der Test erfolgreich abgeschlossen wird, wird die Signaturkarte aktiviert. Auf diese Weise wird den gesetzlichen Anforderungen hinsichtlich der Belehrung Rechnung getragen und gleichzeitig wird der Personalaufwand für diese gesetzlich verlangte Belehrung minimiert.

Gemäß einer weiteren vorteilhaften Ausgestaltung des erfindungsgemäßen Verfahrens wird bei Ausgabe eines Berechtigungsmittels, z. B. in Form einer digitalen Signaturkarte oder bei der Freigabe zur Ausgabe eines Berechtigungsmittels eine Mitteilung an eine dritte Person erzeugt. Dies ist dann sinnvoll, wenn diese dritte Person die zu registrierende Person beauftragt oder bevollmächtigt hat, in das jeweilige Berechtigungsmittel weitere Berechtigungen wie Vollmachten eintragen zu lassen. Auf diese Weise kann z. B. Prokura einer Firma elektronisch erteilt werden und die Prokura erteilende Institution oder Person wird davon in Kenntnis gesetzt.

Gemäß einer weiteren vorteilhaften Ausgestaltung der Erfindung wird die Registrierung nach erfolgreichem Abschluß einer Registrierung selbst tätig beendet, d. h. das Gerät bzw. die Registriereinrichtung deaktiviert sich selbst oder die Registrierung wird nach einer bestimmten Zeitdauer automatisch abgebrochen, da bei Überschreiten einer maximalen Dauer für eine Registrierung ein Manipulationsversuch angenommen wird.

Gemäß weiterer vorteilhaften Ausgestaltungen wird jeder Registrierungsvorgang und auch die Kommunikation zwischen den einzelnen Komponenten des erfindungsgemäßen Systems protokolliert, so daß Manipulationen oder Unregelmäßigkeiten sicher nachgewiesen und bestimmten Personen zugeordnet werden können. Zusätzlich werden die Protokolle und Daten nach einem bestimmten Schema an den zugehörigen Berechtigungsherausgeber übermittelt, der sie auf Vollständigkeit und Richtigkeit überprüft oder um eventuelle Manipulationen festzustellen und sie anschließend in eine elektronische Ablage überführt. Die gesamte Archivierung von Papierdokumenten kann damit entfallen. Ein erheblicher Vorteil, sowohl für die Registuierungstellen als auch für die Berechtigungsherausgeber. Die elektronische Archivierung und Fehlerprüfung gehen Hand in Hand.

Gemäß einer weiteren vorteilhaften Ausgestaltung der Erfindung werden die erhobenen Daten und Protokolle bei der Regierungsstelle nach einem bestimmten Schema gelöscht, wobei die Löschungsfreigabe vorzugsweise durch den zugehörigen Berechtigungsherausgeber erfolgt. Auf diese Weise soll Datenschutz gewährteistet und Manipulation mit den erhobenen Daten ausgeschlossen werden.

Die übrigen Unteransprüche beziehen sich auf weitere vorteilhafte Ausgestaltungen der Erfindung.

Durch die Zuweisung von sicheren IDs und deren Austausch und Überprüfung werden Manipulationen und Unregelmäßigkeiten nahezu vollständig ausgeschlossen, zumindest aber können diese einem Verantwortlichen beweiskräftig zugeordnet werden. Darüber hinaus macht die Verwendung von sicheren IDs die zugeordneten Geräte ohne diese sicheren IDs nutzlos. Im Extremfall ist eine derartige Hardware-Komponente nur funktionsfähig, wenn die sichere ID des Berechtigungsherausgebers, die sichere ID der jeweiligen Registrierungsstelle, die sichere ID der jeweiligen Komponente und die sichere ID eines berechtigten Benutzers vorliegt. Damit besteht selbst bei Diebstahl oder bei Weiterveräußerung einer derartigen Komponente an unberechtigte Dritte kein Sicherheitsrisiko.

Die Ausgabe von Signaturkarten ist neu und noch lange kein Routinevorgang, der mit entsprechender Perfektion und Qualität durchgeführt wird. Es werden anfangs "Kinderkrankheiten" auftreten. Die mangels Masse fehlende Erfahrung und notwendige Lemprozesse können hohe Fehlerraten, Unsicherheiten bei den "Verkäufern" und Mißstimmungen bei den neuen "Kunden" hervorrufen. Das ist Gift für die Markteinführung. Durch das erfindungsgemäße System wird die Qualitätssicherung bei der Registrierung und der Kartenausgabe nach dem Signaturgesetz erleichtert und übliche Anlaufschwierigkeiten werden gemildert. Durch die weitgehende Automatisierung, jedoch mit Eingriffsmöglichkeit von Bedienungspersonal, wird eine gleichbleibend hohe Qualität sichergestellt, was bei Vorgängen, die von Erfüllungsgehilfen nur gelegentlich (z. B. 1 bis 2 mal täglich) bearbeitet werden, nur sehr schwer zu erreichen ist.

Das erfindungsgemäße System und Verfahren ist wirtschaftlicher als das rein manuelle Verfahren. Die vorwiegend manuellen und Papier gestützten Verfahren sind personalintensiv und deshalb teuer. Dazu kommen Medienbrüche, die teilweise Doppelarbeit, immer aber Fehlerquellen darstellen. Die Kosten für die Qualitätssicherung sind deshalb hoch. Je nach Vorgaben ist das System nach der vorliegenden Erfindung ab etwa 35 Registrierungen/Anträgen/Karten pro Monat günstiger als manuelle Verfahren. Die Überlegenheit gründet auf den verkürzten Bearbeitungszeiten in den Registrierungsstellen und bei den Berechtigungsherausgebern (TrustCentern).

Die erfindungsgemäße Registrierung und kartenausgabe hat daher gegenüber herkömmlichen Verfahren folgende Vorteile:
- die Wirtschaftlichkeit gegenüber anderen, insbesondere manuellen Verfahren;
- die Bequemlichkeit der Registrierung im Vergleich zu anderen Verfahren;
- Erfüllung von künftigen Haftungsregeln für Berechtigungsherausgeber und deren Erfüllungsgehilfen;

Für die "Verkäufer" wird eine hohe Ablaufsicherheit gewährleistet, dem "Kunden" wird Bequemlichkeit geboten und bei den Berechtigungsherausgebern schlagen Arbeitserleichterungen, Milderung der Haftungsrisiken und Senkung der Kosten der Registrierung zu Buche.

Weitere Einzelheiten, Merkmale und Vorteile der Erfindung ergeben sich aus der nachfolgenden Beschreiben einer beispielhaften Ausführungsform der Erfindung anhand der Zeichnung.

Es zeigt
Fig. 1 eine schematische Darstellung des Gesamtsystems;
Fig. 2 eine schematische Darstellung einer Registriereinrichtung in einer Registrierungsstelle; und
Fig. 3 eine schematische Darstellung zur Erläuterung des Authentifikationssystems mit sicheren IDs.

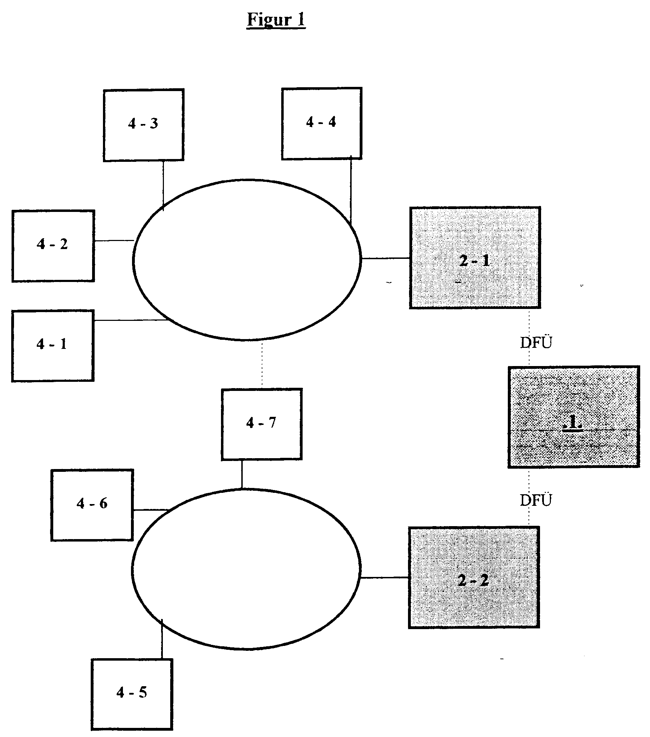

Figur 1 zeigt eine schematische Darstellung des erfindungsgemäßen Systems mit einem übergeordneten Berechtigungsherausgeber 1, der mittels Datenfernübertragung (DFÜ) mit zwei nachgeordneten Berechtigungsherausgebern - auch Trust Center genannt - 2-1 und 2-2 verbunden werden kann (strichliert gezeichnet). Der erste Berechtigungsherausgeber 2-1 ist mittels DFÜ mit einer Mehrzahl von Registrierungsstellen 4-1 bis 4-4 verbunden. Der zweite Berechtigungsherausgeber bzw. das zweite Trust Center 2-2 ist ebenfalls mittels DFÜ mit zwei Registrierungsstellen 4-5 bis 4-7 verbunden. Die einzelnen Registrierungsstellen können auch mit mehreren Berechtigungsherausgebern 2i verbunden sein. Dies ist für die Registrierungsstelle 4-7 beispielhaft durch die strichlierte Verbindung gezeigt.

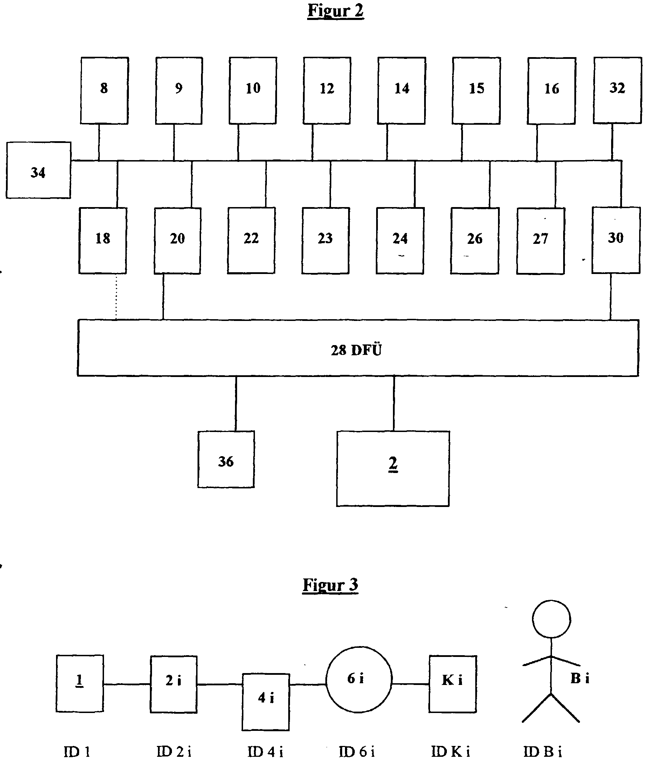

Jede der Registrierungsstellen 4 umfaßt wiederum wenigstens eine Registriereinrichtung 6, deren Aufbau schematisch in Figur 2 dargestellt ist Die Registriereinrichtung 6 umfaßt eine Steuereinheit 8, z. B. in Form eines PCs, einen Bildschirm 9, ein Eingabemittel 10 in Form einer Tastatur oder dgl., ein Ausgabemittel in Form eines Druckers 12, einen ersten Dokumentenleser 14, einem zweiten Dokumentenleser 15 und eine Einrichtung 16 zur Vor-Ort-Erfassing eines biometrischen Merkmals der zu registrierenden Person. Die Registriereinrichtung 6 umfaßt desweiteren eine Verifikationseinheit 18, eine Kartenbezahlungseinheit 20 mit Modem, eine PIN-Eingabeeinrichtung 22, eine Einrichtung 23 zur Digitalisierung einer Unterschrift, eine Chipkarten-Bearbeitungseinrichtung 24, einen PIN-Ausgabedrucker 26, eine Kartenpersonalisiereinheit 27, eine DFÜ-Schnittstelle 28, eine Authentifizierungseinheit 30 und eine unterbrechungsfreie Stromversorgung 32.

Der erste Dokumentenleser 14 dient zum Einlesen von personenbezogenen Daten von amtlichen Ausweisen und umfaßt auch eine Einheit zum Überprüfen der Echtheit der eingelesenen Dokumente. Darüber hinaus erfaßt der Dokumentenleser auch Fotos, Unterschriften, Fingerabdrücke, Fotos der Iris usw. von identifizierenden Dokumenten, die dann in der Verifikationseinheit 18 weiterverarbeitet werden. Der zweite Dokumentenleser 15 ist für andere und nicht-amtliche Dokumente vorgesehen. Die Einrichtung 16 kann eine elektronische Kamera, ein Gerät zur Aufnahme von Fingerabdrücken, ein Gerät zur Aufnahme der Iris oder ähnliches sein. Die Einrichtung 23 zur Digitalisierung einer Unterschrift kann sowohl zur aktuellen Erfassung des biometrischen Merkmals "Unterschrift" verwendet werden als auch zum Unterzeichnen eines Antrags auf Herausgabe einer digitalen Signaturkarte. Dabei wird die Unterschrift gleichzeitig elektronisch aufgezeichnet und den elektronischen Dokumenten als Bild und digital und digital hinzugefügt Über die PIN-Eingabeeinheit 22 kann sich eine berechtigte Bedienungsperson Bi und die zu registrierende Person über eine ihr bereits zugeordnete PIN identifizieren. Die PIN-Eingabeeinheit stellt eine Komponente eines auf Wissen und Lernen basierenden Identifikationssystem dar.

Über die Authentifizierungseinheit 30 und die DFÜ-Schnittstelle 28 ist die Registriereinrichtung 6 mit dem zugehörigen Berechtigungsherausgeber 2 verbindbar. Über die DFÜ-Schnittstelle 28 ist die Registriereinrichtung 6 auch mit externen Datenbanken 36 verbindbar, bei dem es sich beispielsweise um ein Einwohnermelderegister, Führerscheinlisten, Zentralregister, Verzeichnisse von Berufsständen und Untemehmern usw. handelt. Alternativ oder zusätzlich kann die Registriereinrichtung 6 auch aus internen Datenbanken34, z. B. in Form von CD-ROM-Laufwerken, Informationen abrufen. Die internen Datenbanken 34 können auch durch die Information, die bei der Registrierung anfällt aufgebaut werden. Alle Registrierungsvorgänge lassen sich darauf protokollieren und dokumentieren.

Durch die Chipkarten-Bearbeitungseinrichtung 24 und die Kartenpersonalisiereinheit 27 können Berechtigungsmittel in Form von Chipkarten, z. B. eine digitale Signaturkarte bearbeitet werden. Die Chipkarten-Bearbeitungseinrichtung 24 liest vorhanden Daten, personalisiert die vorinitialisierten Chip-Karten, beschreibt sie mit den nötigen Daten, Zertifikaten, Schlüsseln, etc. und gibt sie aus.

Figur 3 zeigt schematisch das Authentifikationssystem in das das Gesamtsystem eingebunden ist. Jeder der "Komponenten" des Gesamtsystems bestehend aus dem übergeordneten Berechtigungsherausgeber 1, den nachgeordneten Berechtigungsherausgebern 2i, den Registrierungsstellen 4i, den Registriereinrichtungen 6i, und berechtigten Bedienungspersonen Bi ist eine sichere ID - ID1, ID2, ID4, ID6 und IDBi - zugeordnet. Zusätzlich können auch noch den einzelnen Hardwarekomponenten Ki der Registriereinrichtung 6 sichere ID - IDKi - zugeordnet werden. Die sichere ID kann beispielsweise ein elektronischer Schlüssel, ein Zertifikat, ein PC-Dongel, etc. sein.

In dem übergeordneten Berechtigungsherausgeber 1 wird eine Liste aller ID2 der mit diesem Berechtigungsherausgeber verbundenen nachgeordneten Berechtigungsherausgebern 2 geführt und verwaltet. Bei Kommunikation zwischen dem übergeordneten Berechtigungsherausgeber 1 und einem der nachgeordneten Berechtigungsherausgeber 2i identifizieren sich die beiden Komponenten anhand ihrer jeweiligen ID - ID1 und ID2i. Ebenso wird bei den jeweiligen nachgeordneten Berechtigungsherausgebern 2i eine Liste der sicheren ID4i der jeweils zugeordneten Registrierungsstellen 4i geführt. Bei Kommunikation zwischen dem jeweiligen Berechtigungsherausgeber 2i und einer zugeordneten Registrierungsstelle 4i identifizieren sich die beiden Komponenten wieder anhand der sicheren ID2i bzw. ID4i. Ebenso wird in den Registrierungsstellen 4i eine Liste mit dem sicheren ID6i der an die jeweilige Registrierungsstelle 4i angeschlossenen Registriervorrichtungen 6i verwaltet. Zusätzlich können auch noch die einzelnen Komponenten Ki der Registriereinrichtung 6i mit sicheren IDKi versehen werden. Damit wird gewährleistet, daß nur "bekannte" und "geeignete" Komponenten Ki an die Registriereinrichtungen 6i angekoppelt bzw. in diese eingekoppelt werden.

Zusätzlich muß sich das Bedienpersonal Bi, die die Registriereinrichtungen 6i bzw. deren Komponenten Ki bedient ebenfalls durch eine Sichere ID - IDBi - ausweisen. Beziehungsweise es kann sich nur mit einer derartigen sicheren ID in die jeweilige Komponente Ki bzw. in die Registriereinrichtung 6i einloggen. Die Bedienerberechtigung IDBi kann entweder von dem Berechtigungsherausgebern 1, 2 oder von den jeweiligen Registilereinrichtung 6i oder den jeweiligen Registrierungsstellen 4i vergeben werden.

Die jeweiligen sicheren ID können bei jeder Kommunikation zwischen den einzelnen Komponenten abgefragt und ausgetauscht werden. Alternativ erfolgt Abfrage und Austausch der sicheren ID nach einem bestimmten Zeitschema oder bei vorliegen von bestimmten Ereignissen. Die Abfrage der Berechtigungs-ID IDBi der Bedienungspersonen Bi erfolgt beim Start der Anwendung "Identifizierung/Registrierung", beim Einloggen der jeweiligen Person oder wiederholt nach einem bestimmten zeitlichen Schema oder bei jedem neuen Registrierungsvorgang.

Die Registrierung einer zu registilerenden Person bzw. der Betrieb einer Registriereinrichtung 6 kann sowohl in einem Bedienermodus als auch bei unkritischen Anwendungen in einem Selbstbedienungsmodus erfolgen. Im Selbstbedienungsmodus wird die zu registrierende Person über Bildschirm, Tastatur und Lautsprecher durch die einzelnen Registrierungsschritte geführt. Im Bedienermodus ist eine Bedienerperson anwesend, die die einzelnen Registrierungsschritte durchführt und bestimmte Überprüfungen vornimmt.

Das erfindungsgemäße System bietet in seiner bevorzugten Ausgestaltung folgende Voraussetzungen für die sichere Identifizierung und Registrierung von Personen :
1. Das 4-Augenprinzip wird durch ein nicht manipulierbares Gerät mit den Kernkomponenten Identifizierung, Autentifizierung und Verifizierung und den Hilfskomponenten scannen und lesen von Dokumenten sowie Erfassen von aktuellen biometrischen Merkmalen (Foto, Unterschrift, Fingerprint, Iris, etc.).
2. Das sichere Gerät ist eine entsprechend sichere Umgebung (Fig 3). Dabei sollte das Gerät zur Funktionsfähigkeit den autentifizierten Kontakt mit einem von einer Route zertifizierten Berechtigungsherausgeber, wie einem zertifizierten Trustcenter, verlangen. Der Verkauf eines solchen Gerätes an Personen mit Fälschungsabsicht bei der Ausgabe digitaler Signaturkarten oder anderer Berechtigungen ist dadurch unschädlich.
3. Das Gerät ermöglicht ein vorzugsweise zertifiziertes Verfahren zum Ausgeben von Berechtigungsmitteln.
4. Es gibt nur einen Verantwortlichen d.h. der Vorgang wird in Beisein nur einer verantwortlichen Person durchgeführt.

### Bezugszeichenliste:

- 1: übergeordneter Berechtigungsherausgeber
- 2i: nachgeordneter Berechtigungsherausgeber
- 4i: Registrierungsstelle
- 6i: Registriereinrichtung
- 8: Steuereinheit
- 9: Bildschirm
- 10: Eingabemittel, wie Tastatur etc.
- 12: Drucker
- 14: erster Dokumentenleser
- 15: zweiter Dokumnetenleser
- 16: Einrichtung zur aktuellen Erfassung eines biometrischen Merkmals
- 18: Verifikationseinheit
- 20: Kartenbezahlungseinheit
- 22: PIN-Eingabeeinheit
- 23: Einrichtung zur Digitalisierung einer Unterschrift
- 24: Chipkarten-Bearbeitungseinrichtung
- 26: PIN-Ausgabedrucker
- 27: Kartenpersonalisiereinheit
- 28: DFÜ-Schnittstelle
- 30: Authentifizierungseinheit
- 32: unterbrechungsfreie Stromversorgung
- 34: externe Datenbanken
- 36: interne Datenbanken
- Bi: berchtigte Bedienungspersonen
- Ki: Komponenten von 6i
- ID1: sichere ID von 1
- ID2i: sichere ID von 2i
- ID4i: sichere ID von 4i
- ID6i: sichere ID von 6i
- IDKi: sichere ID von Ki

## Patentansprüche

1. System zur sicheren Identifikation und Registrierung von Personen, insbesondere für die Herausgabe von personenbezogenen Berechtigungsmitteln wie einer digitalen Signaturkarte, mit:
- wenigstens einem Berechtigungsherausgeber (1, 2) mit einer EDV-Anlage,
- wenigstens einer Registrierungsstelle (4) mit einer Registriereinrichtung (6),
- wobei die EDV-Anlagen des Berechtigungsherausgebers (1, 2) und die Registriereinrichtung (6) der Registrierungsstellen (4) mittels DFÜ miteinander verbunden und in ein Authentifikationssystem (30, ID) eingebunden sind,
- wobei die Registriereinrichtung (6) der wenigstens einen Registrierungsstelle (4) wenigstens eine Identifikationseinheit (14, 15, 16, 23), wenigstens ein Ausgabemittel (9, 12), wenigstens ein Eingabemittel (9, 10) und eine Steuereinheit (8) umfaßt,
- wobei die Identifikationseinheit (14, 15, 16, 23) einen Dokumentenleser (14, 15) zum Lesen von die zu registrierende Person identifizierenden Dokumenten, wie z. B. einem amtlichen Ausweis, und ein Mittel (16) zur aktuellen Erfassung biometrischer Daten der zu registrierenden Person aufweist.

2. System nach Anspruch 1, gekennzeichnet durch wenigstens eine Verfifikationseinheit (18), die (18) auf den durch den Dokumentenleser (14, 15) erfaßten identifizierenden Dokumenten enthaltene biometrischen Merkmalen mit den durch die Identifikationseinheit (14, 15, 16) erfaßten biometrischen Merkmalen auf Übereinstimmung vergleicht und anhand einer voreingestellten Identitätswahrscheinlichkeit das Ergebnis der Verifikation feststellt.

3. System nach Anspruch 1 oder 2, gekennzeichnet durch eine Verifikationseinheit (18), welche die inhaltliche Echtheit der identifizierenden und/oder beschreibenden Dokumente überprüft, indem die das entsprechende Dokument ausstehende Institution per DFÜ angefragt wird, ob das jeweilige Dokument mit genau diesen Merkmalen tatsächlich ausgegeben worden und noch gültig ist.

4. System nach Anspruch 1,2 oder 3 gekennzeichnet durch wenigstens einen übergeordneten Berechtigungsherausgeber (1) mit einer EDV-Anlage.

5. System nach Anspruch 1,2,3 oder 4, dadurch gekennzeichnet, daß auf den EDV-Anlagen der Berechtigungsherausgeber (1, 2) und/oder der Registriereinrichtungen (6) der Registrierungsstellen (4) Programme und Daten für die sichere Identifikation und Registrierung von Personen, insbesondere für die Herausgabe von personenbezogenen Berechtigungen, wie einer digitalen Signaturkarte, von anderen Anwendungen virtuell oder physisch getrennt sind.

6. System nach Anspruch 1,2,3,4 oder 5, dadurch gekennzeichnet, daß die Registriereinrichtungen (6) der Registrierungsstellen (4) ausschließlich für die sichere Identifikation und Registrierung von Personen, insbesondere für die Herausgabe von personenbezogenen Berechtigungen wie einer digitalen Signaturkarte genutzt werden.

7. System nach einem der vorhergehenden Ansprüche, dadurch gekennzeichnet, daß die Identifikationseinheit (14, 15, 16, 23) der Registrierungsstellen (4) eine Einrichtung zur Echtheitsprüfüng der durch den Dokumentenleser (14) erfaßten Dokumente aufweist.

8. System nach einem der vorhergehenden Ansprüche, dadurch gekennzeichnet, daß Berechtigungsherausgeber (1, 2) und/oder Registrierungsstellen (4) mittels einer sicheren ID (ID1, ID2i, ID4i) in Form eines elektronischen Schlüssels eindeutig identifizierbar sind.

9. System nach Anspruch8, dadurch gekennzeichnet, daß EDV-Anlagen bzw. Komponenten davon der Berechtigungsherausgeber (1, 2) und/oder die Resgistriereinrichtungen (6) der Registrierunsgsstellen (4) mittels einer sicheren ID (ID6i, IDKi) in Form eines elektronischen Schlüssels eindeutig identifizierbar sind.

10. System nach Anspruch 8 oder 9, dadurch gekennzeichnet, daß die sichere ID ein elektronisches Zertifikat und/oder eine digitale Signatur und/oder eine Hardware-Komponente ist.

11. System nach einem der vorhergehenden Ansprüche 8 bis 10, dadurch gekennzeichnet, daß die Ausgabe der sicheren ID (ID1, ID2i) der Berechtigungsherausgeber (1, 2) durch den übergeordneten Berechtigungsherausgeber (1) erfolgt.

12. System nach einem der vorhergehenden Ansprüche 8 bis 11, dadurch gekennzeichnet, daß die Ausgabe der sicheren ID (ID6i) der Registrierungsstellen (6) durch den Berechtigungsherausgeber (2) erfolgt.

13. System nach einem der vorhergehenden Ansprüche 8 bis 12, dadurch gekennzeichnet, daß die sichere ID durch die ausgebende Stelle periodisch oder bei bestimmten Ereignissen überprüft wird.

14. System nach einem der vorhergehenden Ansprüche 8 bis 13, dadurch gekennzeichnet, daß die Registriereinrichtung (6i) der Registrierungsstellen (4) nur bei Vorliegen einer sicheren ID der jeweiligen Registrierungsstelle (4) und einer sicheren ID des zugehörigen Berechtigungsherausgebers (1, 2) funktionsfähig ist

15. System nach einem der vorhergehenden Ansprüche, dadurch gekennzeichnet, daß die Bedienung der EDV-Anlagen und/oder der Registriereinrichtungen (6) nur durch berechtigte Personen (Bi) mit einer entsprechenden sicheren ID (IDBi) möglich ist.

16. Registriereinrichtung, insbesondere für ein System nach einem der Ansprüche 1 bis 15, mit wenigstens einer Identifikationseinheit (14, 15, 16, 23), wenigstens einer Verifikationseinheit (18), wenigstens einem Ausgabemittel (9, 12), wenigstens einem Eingabemittel (9, 19) und einer Steuereinheit (8),
- wobei die Identifikationseinheit (14, 15, 16, 23) einen Dokumentenleser (14, 15) zum Lesen von die zu registrierende Person identifizierenden Dokumenten, wie z. B. einem amtlichen Ausweis, und ein Mittel (16) zur aktuellen Erfassung biometrischer Daten der zu registrierenden Person auweist, und
- wobei die Verifikationseinheit (18) auf den durch den Dokumentenleser (14, 15) erfaßten identifizierenden Dokumenten enthaltene biometrischen Merkmalen mit den durch die Identifikationseinheit (14, 15, 16, 23) erfaßten biometrischen Merkmalen auf Übereinstimmung vergleicht und anhand einer voreingestellten Identitätswahrscheinlichkeit das Ergebnis der Verifikation feststellt.

17. Registriereinrichtung nach Anspruch 16, gekennzeichnet durch einen weiteren Dokumentenleser (15).

18. Registriereinrichtung nach Anspruch 16 oder 17, gekennzeichnet durch eine Einrichtung (20) zum Bezahlen, insbesondere durch ein EFTPOS-Terminal und/oder einer Schnittstelleneinrichtung (28) für den Zugriff auf interne und/oder externe Datenbanken und Register(34, 36).

19. Registriereinrichtung nach einem der Ansprüche 16 bis 18, gekennzeichnet durch eine Bearbeitungseinrichtung (24, 27) für Berechtigungsmittel, insbesondere in Form von Chipkarten.

20. Registriereinrichtung nach einem der Ansprüche 16 bis 19, dadurch gekennzeichnet, daß die Identifikationseinheit (14, 15, 16, 23) eine Einrichtung (23) zum Erfassen der Dynamik eines biometrischen Merkmals umfaßt.

21. Verfahren mm Betreiben eines Systems zur sicheren Identifikation und Registrierung von Personen für die Ausgabe von personenbezogenen Berechtigungsmitteln nach einem der vorhergehenden Ansprüche mit den Verfahrensschritten:
a) Einlegen eines die zu registrierende Person identifizierenden Dokuments in den Dokumentenleser (14, 15), wobei das identifizierende Dokument wenigstens ein biometrisches Merkmal der zu registrierenden Person enthält;
b) Einlesen der Personendaten von dem identifizierenden Dokument;
c) Übernehmen des wenigstens einen biometrischen Merkmals der zu registrierenden Person von dem identifizierenden Dokument;
d) aktuelle Erfassung wenigstens eines biometrischen Merkmals der zu registrierenden Person, wobei wenigstens eines der aktuell erfaßten biometrischen Merkmale in Schrift c) von dem identifizierenden Dokument übernommen worden ist;
e) Überprüfen der Daten von dem identifzierenden Dokument mit den aktuell erfaßten Daten auf Übereinstimmung;
f) Feststellen der Identität bei Übereinstimmung in Schritt e) mit einer bestimmten Wahrscheinlichkeit; und
g) Freigabe des gewünschten personenbezogenen Berechtigungsmittels zur Ausgabe.

22. Verfahren nach Anspruch 21, gekennzeichnet durch den weiteren Verfahrensschritt:
Überprüfen der physischen Echtheit des identifizierenden Dokuments.

23. Verfahren nach einem der Ansprüche 21 oder 22, gekennzeichnet durch den weiteren Verfahrensschritt: Einlesen von wenigstens einem weiteren die zu identifizierende Person beschreibenden Dokument der zu registrierenden Person.

24. Verfahren nach einem der Ansprüche 21 bis 23, dadurch gekennzeichnet, daß von dem weiteren Dokument Attribute der zu registrierenden Person wie Vollmachten, Berechtigungen etc., eingelesen werden.

25. Verfahren nach einem der Ansprüche 21 bis 24, gekennzeichnet durch den weiteren Verfahrensschritt:
Überprüfen der inhaltlichen Echtheit des identifizierenden Dokuments indem die das identifizierende Dokument austellende Institution per DFÜ angefragt wird, ob das jeweilige identifizierende Dokument mit genau diesen Merkmalen tatsächlich ausgegeben worden ist und noch gültig ist.

26. Verfahren nach einem der Ansprüche 21 bis 25, gekennzeichnet durch den weiteren Verfahrensschritt:
Auswahl der gewünschten Registrierung bzw. des gewünschten Berechtigungsmittels zu Beginn der Registrierung.

27. Verfahren nach einem der Ansprüche 21 bis 26, gekennzeichnet durch den weiteren Verfahrensschritt:
Ergänzen der personenbezogenen Daten aus vorhandenen Datenbeständen und/oder durch dialoggeführte Rückfrage bei der zu registrierenden Person.

28. Verfahren nach einem der Ansprüche 21 bis 27, dadurch gekennzeichnet, daß die erfaßten Daten, Merkmale und sonstige Angaben auf einen Anzeigeeinrichtung angezeigt werden.

29. Verfahren nach einem der Ansprüche 21 bis 28, dadurch gekennzeichnet, daß die erfaßten Daten, Merkmale und sonstige Angaben ausgedruckt werden.

30. Vefahren nach einem der Ansprüche 21 bis 29, dadurch gekennzeichnet, daß die erfaßten Daten, Merkmale und sonstige Angaben in Form eines Antrags angezeigt und/oder ausgedruckt werden.

31. Verfahren nach einem der Ansprüche 21 bis 30, dadurch gekennzeichnet, daß der Registrierungsvorgang durch die zu registierende Person mittels Unterschrift bestätigt wird, daß die geleistete Unterschrift mit der auf dem identifizierenden Dokument befindlichen Unterschrift verglichen wird, und daß bei ausreichender Übereinstimmung die Freigabe der gewünschten Registrierung erfolgt.

32. Verfahren nach einem der Ansprüche 21 bis 31 zur Ausgabe einer digitalen Signaturkarte, gekennzeichnet durch die zusätzlichen Verfahrensschritte:
A) Auslesen der von dem Berechtigungsherausgeber für die Zertifikaterstellung und Bearbeitung benötigten PSE-Daten aus einer vorinitialisierten Chipkarte in einem entsprechend hoch zertifizierten Kartenlese/Kartenschreibgerät;
B) Export der erfaßten Daten der zu registrierenden Person in ein den gesetzlichen Regelungen entsprechendes Software-Programm;
C) Zuordnen der Daten der zu registrierenden Person zu den PSE-Daten;
D) Zusammenstellen der von dem Berechtigungsherausgeber benötigten Daten und Anzeige auf einer gesetzeskonformen Anzeigeeinrichtung;
E) Signieren, Verschlüsseln und Übertragen dieser Daten an den Berechtigungsherausgeber;
F) Bearbeiten durch den Berechtigungsherausgeber und Übermitteln der zur Erstellung der Signaturkarte benötigten Daten, wie Zertifikat oder Freigabecodes, digital signiert und verschlüsselt an die Registrierungsstelle;
G) Entschlüsselung und Überprüfung der von dem Berechtigungsherausgeber übermittelten Daten;
H) Falls die Überprüfung in Schritt G) positiv ist: Personalisieren und Übertragen der erforderlichen Daten mit Zertifikat auf die vorinitialisierte Chipkarte;
I) Belehrung der zu registrierenden Person entsprechend den gesetzlichen Regelungen; und
J) Ausdruck von vorzugsweise zwei Bestätigungen über die erfolgte Belehrung und Bestätigung des Erhalts der digitalen Signaturkarte.

33. Verfahren nach Anspruch 32, gekennzeichnet durch die weiteren Verfahrensschritte:
Überprüfung der Einmaligkeit des in den PSE-Daten der vorinitialisierten Chipkarte enthaltenen Schlüssels durch den Berechtigungsherausgeber.

34. Verfahren nach Anspruch 32 oder 33, dadurch gekennzeichnet, daß in Schritt E) auch das Prüfungsergebnis an den Berechtigungsherausgeber übertragen wird

35. Verfahren nach einem der Ansprüche 32 bis 34, dadurch gekennzeichnet, daß die digitale Signaturkarte erst ausgegeben wird, wenn die zu registrierende Person die PIN der digitalen Signaturkarte ändert.

36. Verfahren nach einem der Ansprüche 32 bis 35, dadurch gekennzeichnet, daß die Belehrung in Schritt I) in Form einer programmierten, dialoggeführten Unterweisung mit Test erfolgt und daß die digitale Signaturkarte nur aktiviert wird, wenn die zu registrierende Person die programmierte Unterweisung mit Test erfolgreich absolviert hat.

37. Verfahren nach einem der Ansprüche 21 bis 36, dadurch gekennzeichnet, daß eine Bestätigungsmeldung an eine dritte Person erzeugt wird, die Berechtigungen, insbesondere Vertretungsmacht, für die jeweilige zu registrierende Person und das jeweilige Berechtigungsmittel erteilt hat, wobei die Angaben über die Berechtigunen auf dem Berechtigungsmittel gespeichert werden.

38. Verfahren nach einem der Ansprüche 21 bis 37, dadurch gekennzeichnet, daß die Registrierung nach Abschluß der Registrierung oder nach Ablauf einer bestimmten Zeitdauer beendet wird.

39. Verfahren nach einem der Ansprüche 21 bis 38, dadurch gekennzeichnet, daß die Registrierungstellen alle Registrierungsvorgänge protokollieren, daß die Protokolle mit den dazugehörigen personenbezogenen Daten und geforderten Dokumenten nach einem bestimmten Schema an den Berechtigungsherausgeber übermittelt werden, und daß der Berechtigungsherausgeber die Protokolle, Dokumente und die Daten hinsichtlich Lesbarkeit und Vollständigkeit überprüft.

40. Verfahren nach einem der Ansprüche 21 bis 39, dadurch gekennzeichnet, daß die in den Registrierungstellen ermittelten und erfaßten Daten und Dokumente nach einem bestimmten zeitlichen Schema gelöscht werden.

41. Verfahren nach einem der Ansprüche 21 bis 40, dadurch gekennzeichnet, daß die in den Registrierungstellen ermittelten und erfaßten Daten und Dokumente nach Löschungsfreigabe durch den Berechtigungsherausgeber gelöscht werden.
